(19) **Europäisches Patentamt**
**European Patent Office**
**Office européen des brevets**

(11) **EP 4 604 022 A1**

(12) **EUROPEAN PATENT APPLICATION**

(43) Date of publication:
**20.08.2025 Bulletin 2025/34**

(21) Application number: **25154844.2**

(22) Date of filing: **30.01.2025**

(51) International Patent Classification (IPC):
**G06N 3/092** (2023.01)   **H04W 88/08** (2009.01)

(52) Cooperative Patent Classification (CPC):
**G06N 3/092**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.02.2024 FI 20245120**

(71) Applicant: **Nokia Solutions and Networks Oy**
**02610 Espoo (FI)**

(72) Inventors:
• **FEKI, Afef**
**92330 Sceaux (FR)**

• **KADADI, Shivanand**
**560065 Bengaluru (IN)**
• **RAMACHANDRAN, Srilatha**
**560093 Bengaluru (IN)**
• **BOUTAUD DE LA COMBE, Xavier**
**22560 Trébeurden (FR)**
• **MIHAILESCU, Claudiu**
**78000 Versailles (FR)**

(74) Representative: **MERH-IP Matias Erny Reichl Hoffmann**
**Patentanwälte PartG mbB**
**Paul-Heyse-Straße 29**
**80336 München (DE)**

(54) **APPARATUS AND METHOD FOR ON-DEVICE REINFORCEMENT LEARNING**

(57)    An architecture is disclosed to enable on-device reinforcement learning (RL) for implementing a functionality of an apparatus, for example a base station. The architecture comprises a machine learning management service, a data collection engine, a training engine, and an inference engine which are agnostic to the use case. It cooperates with a RL agent which is part of the software implementing the functionality. The architecture supports tabular RL and deep RL. During training, the RL agent sends training data samples to the data collection engine and the training engine computes the state-action values / the policy from the training data samples. In tabular RL, the training engine updates a table of state-action values. In deep RL, it constitutes a training data set from the training data samples and the computed targets and uses the training data set to train a neural network implementing a value / policy function. When trained the neural network is provided to the inference engine for implementing the functionality.

FIG.3

EP 4 604 022 A1

**Description**

TECHNICAL FIELD

Various example embodiments relate generally to apparatus and methods for on-device reinforcement learning, particularly for reinforcement learning embedded in a network apparatus, for example in a base station.

BACKGROUND

Reinforcement learning (RL) is a field of artificial intelligence (AI) and machine learning (ML) where solutions are learned for a given environment via trial-and-error (commonly referred to as exploration - exploitation) to reach a goal. A RL agent learns to make decisions by interacting with its environment. The RL agent performs actions which impact the environment and receives rewards based on the outcomes of the actions for a given state. The decisions are made with the goal to maximize a cumulative reward over time.

A potential gain of RL comes from the ability to automatically adapt to the local characteristics of the environment. RL is an alternative ML solution particularly interesting in situations where it is difficult to gather a labelled data set to run supervised learning.

In radio access networks (RAN) for example, certain AI/ML-based radio resource management functions can only be learned via interactions with the radio network environment. Therefore, RL is attracting an increasing interest in the field of radio access networks to address challenges such as maximizing the resources utilization while minimizing the performance degradation.

The present disclosure relates to the implementation of RL in a network apparatus, for example a base station of a radio access network.

SUMMARY

According to some aspects, there is provided the subject matter of the independent claims. Some further aspects are defined in the dependent claims.

In a first aspect, an apparatus is disclosed comprising memory and processing means for implementing one or more functionalities of the apparatus with on-device reinforcement machine learning. The memory and processing means comprise at least a reinforcement learning agent for interacting with an environment, a machine learning management service, a data collection engine, a training engine, and a machine learning inference engine. They are configured so that in a first reinforcement learning mode:

- the machine learning management service provides configuration information to at least the data collection engine, the training engine and the machine learning inference engine,
- the reinforcement learning agent provides training data samples to the data collection engine, a training data sample comprising: - a current state $S_i$ of the environment,- an action $A_i$ chosen by the reinforcement learning agent depending on an inference result provided by the machine learning inference engine and following a first exploration/exploitation balancing rule provided by the machine learning management service as part of the configuration information,- a next step $S_{i+1}$ observed in response to applying the chosen action to the environment, and - a reward $R_i$ from the environment for the action applied at state $S_i$,
- the data collection engine stores the training data samples obtained from the reinforcement learning agent,
- the training engine checks a first convergence condition provided by the machine learning management service as part of the configuration information, and in the absence of convergence: - computes a target $T_i$ from each training data sample $\{S_i, A_i, R_i, S_{i+1}\}$ for a plurality of training data samples obtained from the data collection engine,- builds a training data set comprising triples of states $S_i$, actions $A_i$, and targets $T_i$, - trains a neural network with said training data set to learn a value or a policy function, and - the training engine provides the trained neural network for use by the machine learning inference engine for implementing said functionality.

In an embodiment, the trained neural network is provided to the machine learning inference engine, by the training engine directly or indirectly through the machine learning management service.

In another embodiment, the training engine is configured to trigger an update of the first exploration/exploitation balancing rule when the first convergence condition is met to stop exploration.

In another embodiment, the machine learning management service, the data collection engine, and the training engine are further configured so that in a second reinforcement learning mode :

- the machine learning management service provides configuration information to at least the data collection engine

and the training engine,

- the reinforcement learning agent provides training data samples to the data collection engine, a training data sample comprising: - a current state $S_i$ of the environment, an action $A_i$ chosen by the reinforcement learning agent depending on state-action values stored in the table, and following a second exploration/exploitation balancing rule provided by the machine learning management service as part of the configuration information, a next step $S_{i+1}$ observed in response to applying the chosen action to the environment, and a reward $R_i$ from the environment for the action applied at state $S_i$,
- the data collection engine stores the training data samples obtained from the reinforcement learning agent,
- the training engine checks a second convergence condition provided by the machine learning management service as part of the configuration information, and in the absence of convergence computes state-action values from each training data sample $\{S_i, A_i, R_i, S_{i+1}\}$ for a plurality of training data samples obtained from the data collection engine, and updates the table with the computed state-action values, wherein a given state-action value is computed for a given training data sample $\{S_i, A_i, R_i, S_{i+1}\}$ as a function of an expected cumulative reward achievable by applying the given action $A_i$ to the given current state $S_i$ while taking into account the given reward $R_i$ and the given next state $S_{i+1}$.

In another embodiment, the machine learning management service is configured to provide a training triggering condition to the training engine, and the training engine is configured to obtain training data samples from the data collection engine when the training triggering condition is met.

In another embodiment, the training engine is configured to trigger an update of the second exploration/exploitation balancing rule when the second convergence condition is met to stop exploration.

In a second aspect, a computer-implemented on-device reinforcement machine learning method is disclosed for implementing a functionality of an apparatus through a reinforcement learning agent interacting with an environment. The method involves a machine learning management service, a data collection engine, a training engine, and a machine learning inference engine. The method comprises, in a first reinforcement learning mode:

- by the machine learning management service, providing configuration information to at least the data collection engine, the training engine and the machine learning inference engine ,
- by the reinforcement learning agent, providing training data samples to the data collection engine, a training data sample comprising: - a current state $S_i$ of the environment,- an action $A_i$ chosen by the reinforcement learning agent depending on an inference result provided by the machine learning inference engine, and following a first exploration/exploitation balancing rule provided by the machine learning management service as part of the configuration information, - a next step $S_{i+1}$ observed in response to applying the chosen action to the environment, and - a reward $R_i$ from the environment for the action applied at state $S_i$,
- by the data collection engine, storing the training data samples obtained from the reinforcement learning agent,
- by the training engine checking a first convergence condition provided by the machine learning management service as part of the configuration information, and in the absence of convergence: - computing a target $T_i$ from each training data sample $\{S_i, A_i, R_i, S_{i+1}\}$ for a plurality of training data samples, - building a training data set comprising triples of states $S_i$, actions $A_i$, and targets $T_i$, - training a neural network with said training data set to learn a value or a policy function, - and providing the trained neural network for use by the machine learning inference engine for implementing said functionality.

In an embodiment, the method further comprises providing the trained neural network to the machine learning inference engine, by the training engine directly or indirectly through the machine learning management service.

In an embodiment, the method further comprises triggering an update of said first exploration/exploitation balancing rule by the training engine when the first convergence condition is met to stop exploration.

In an embodiment, the method further comprises, in a second reinforcement learning mode:

- by the machine learning management service, providing configuration information to at least the data collection engine and the training engine,
- by the reinforcement learning agent, providing training data samples to the data collection engine, a training data sample comprising: a current state $S_i$ of the environment, -an action $A_i$ chosen by the reinforcement learning agent depending on state-action values stored in the table, and following a second exploration/exploitation balancing rule provided by the machine learning management service as part of the configuration information, - a next step $S_{i+1}$ observed in response to applying the chosen action to the environment, and - a reward $R_i$ from the environment for the action applied,
- by the data collection engine, storing the training data samples obtained from the reinforcement learning agent,
- by the training engine, checking a second convergence condition provided by the machine learning management service as part of the configuration information, and in the absence of convergence computing state-action values from each training data sample {Si, Ai, Ri, Si+1} for a plurality of training data samples obtained from the data collection engine, and updating the table with the computed state-action values, wherein a given state-action value is computed for a given training data sample {Si, Ai, Ri, Si+1} as a function of an expected cumulative reward achievable by applying the given action Ai to the given current state Si while taking into account the given reward Ri and the given next state Si+1.

In an embodiment, the method further comprises providing a training triggering condition by the machine learning management service to the training engine and, obtaining training data samples by the training engine from the data collection engine when the training triggering condition is met.

In an embodiment, the method further comprises triggering an update of the second exploration/exploitation balancing rule by the training engine when the first convergence condition is met to stop exploration.

In a third aspect, a base station for a radio access network is disclosed comprising an apparatus as disclosed herein, for implementing one or more functionalities of the base station with on-device reinforcement machine learning.

In a fourth aspect, a computer program is disclosed comprising program instructions which when executed by an apparatus cause the apparatus to execute the steps of a method as disclosed herein.

In fifth aspect, the disclosed computer program product is embodied as a computer readable medium or directly loadable into a computer.

BRIEF DESCRIPTION OF THE DRAWINGS

Example embodiments will become more fully understood from the detailed description given herein below and the accompanying drawings, which are given by way of illustration only and thus are not limiting of this disclosure.

FIG.1 is a schematic representation of a RL framework.

FIG.2. is a block diagram of the disclosed RL architecture.

FIG.3 is a chart representing the signaling flow between the different elements of the architecture when DRL is implemented.

FIG.4 is a signal flowchart between the different elements of the architecture when tabular RL is implemented.

FIG.5 is a block diagram of an exemplary embodiment of a training engine software container as disclosed herein.

FIG.6 is a block diagram explaining the operation of the of the training software container for tabular RL.

FIG.7 is a block diagram explaining the operation of the of the training software container for deep RL.

FIG.8 is a state diagram of the architecture in tabular RL.

FIG.9 is a state diagram of the architecture in deep RL.

FIG.10 is a schematic representation of an apparatus suitable for implementing various aspects of the disclosure.

DETAILED DESCRIPTION

Various example embodiments will now be described more fully with reference to the accompanying drawings in which some example embodiments are shown.

Detailed example embodiments are disclosed herein. However, specific structural and functional details disclosed herein are merely representative for purposes of describing example embodiments. The example embodiments may, however, be embodied in many alternate forms and should not be construed as limited to only the embodiments set forth herein. Accordingly, while example embodiments are capable of various modifications and alternative forms, the embodiments are shown by way of example in the drawings and will be described herein in detail. It should be understood, however, that there is no intent to limit example embodiments to the particular forms disclosed.

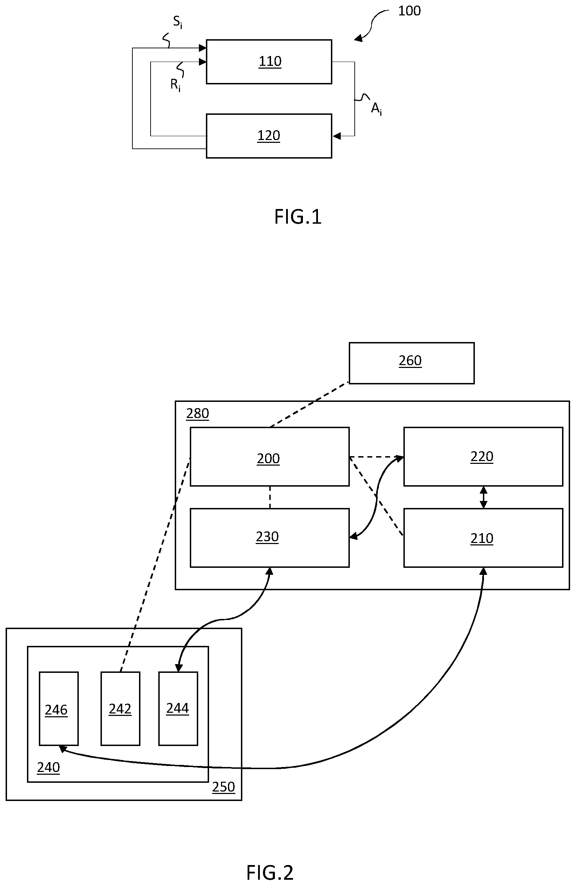

FIG.1 is a schematic representation of a RL framework 100. The RL framework 100 comprises an RL agent represented as a block 110 and an environment represented as a block 120. The agent 110 makes a decision based on a current state $S_i$ of the environment 120. The decision of the RL agent leads to an action $A_i$ which is applied to the environment 120. The environment 120 generates a reward $R_i$ for having chosen action $A_i$ and, as a result of the action $A_i$,

moves from the current state $S_i$ to a next state $S_{i+1}$. The Agent 110 receives as input the next state $S_{i+1}$ and the reward $R_i$. The next state becomes the current state ($S_i=S_{i+1}$) and the learning process is iterated. The decisions of the agent 110 are based on the current state $S_i$ and aims to maximize a cumulative reward over a sequence of samples $\{S_i, A_i, R_i, Si+i\}$. When learning has converged, the RL agent has learned to make decisions that maximize the cumulative reward over time. Then decisions of the RL agent can be used in implementing the desired functionality of the apparatus. Training can stop or continue depending on the use case. Training can also take place periodically or upon a trigger e.g. in case of performance degradation due to a change of context.

Typically, the RL agent can be implemented in two ways which are referred to as tabular RL and deep RL in the following of the description. Deep RL and Tabular RL constitute a first and a second reinforcement learning mode respectively. As will be further described below, in the tabular RL, the RL agent chooses actions by using a table storing values associated with state-action pairs (referred to as state-action values). In deep RL, instead of a table, a neural network is used which implement a value function and/or a policy function. Deep RL is typically used when the dimension of state-actions becomes too high to be easily tracked with a table.

A training process is needed to get the table used in tabular RL, and to learn a value/policy function used in deep RL. At each iteration i of the training process, the RL agent decides to operate in exploration mode or in exploitation mode based on an exploration/exploitation balancing rule. An example of such exploration/exploitation balancing rule is known as $\varepsilon$-greedy. The exploration parameter $\varepsilon$ indicates the probability of choosing to explore vs. exploit. It decreases in time as learning progresses. In exploitation, the RL agent chooses the action that it estimates to have the best expected reward, based on the data it has collected so far. Whereas in exploration, the agent tries new actions to gather more information about the environment. For example, in exploration, the decision is a random decision or the second-best decision based on the current knowledge, or any other mechanism to explore new actions. For simplicity, the embodiments described below refer to a random decision for the exploration. This is not limitative.

For example, in tabular RL with Q learning, the decision of the RL agent at iteration i can be formulated as follows:

- with probability $\varepsilon$, the RL agent selects a random action $A_i$ (exploration mode)
- otherwise (exploitation mode), the RL agent selects an action $A_i$ such that

$$A_i = argmax_a[Q(S_i, a)]$$

where $a$ are the possible actions for the current state $S_i$, and $Q(S_i, a)$ are the state-action values.

The state-actions values are stored in a table. The table is initialized arbitrarily (e.g. randomly), and the state-action values are updated at each iteration of the training process based on the observed rewards and state transitions e.g. following the Bellman equation :

$$Q(S_i, A_i) = Q(S_i, A_i) + \alpha \left[ R_i + \gamma \max_a Q(S_{i+1}, a) - Q(S_i, A_i) \right]$$

where $\alpha$ and $\gamma$ are known as learning rate and discount factor respectively and need to be set depending on the specific problem to solve.

The Bellman equation expresses a recursive relationship between the value of a state-action pair and the values of its successor states, and it forms the foundation for many reinforcement learning algorithms including value-based, policy-based, and actor-critic algorithms.

In a value-based deep RL implementation, the table is replaced with a deep neural network (NN) which learns an action-value function to predict state-action values for all actions in each state of the environment. The weights of the neural network are initialized e.g. randomly and then updated once training data samples $\{S_i, A_i, R_i, S_{i+1}\}$ have been collected from the environment. The collected training data samples are used to train the neural network in supervised learning mode (SL). For example, in deep Q-learning (DQN), the neural network is trained as follows:

- for each training data sample $\{S_i, A_i, R_i, S_{i+1}\}$ in an episode, a target $T_i$ is computed with:

$T_i = R_i$ when $S_{i+1}$ is the terminal state of the episode

$$T_i = R_i + \gamma \max_a Q(S_{i+1}, a)$$ otherwise

- and the neural network is trained to minimize the loss function $(T_i - Q(S_i, A_i))^2$

In a policy-based deep RL implementation, rather than learning a function that takes a state as input and output state-action values for all state-action pairs, the neural network learns directly a function that outputs a probability distribution of the actions that can be taken from a given state. The reinforcement learning agent can then choose an action by sampling from the probability distribution.

Another deep RL implementation known as actor-critic combines a neural network that learns a value function and a neural network that learns a policy function.

In deep RL, the neural network used to implement the value/policy function needs to be trained with supervised learning. This requires collecting a training data set prior to starting to train the model.

An architecture will now be described to enable on-device reinforcement learning for implementing a functionality of an apparatus, for example a base station in a radio access network. Beam management is an example, amongst many others, of a functionality of a base station that can be implemented with reinforcement learning. The disclosure is however not limited to implementations in a network apparatus. It can apply to other types of equipment. The disclosed architecture supports both a deep RL implementation and a tabular RL implementation. It is also applicable for implementing supervised learning (SL). Some of the above-described elements can be omitted when only deep RL or tabular RL needs to be supported. And the role of the elements may differ depending on the machine learning type being implemented (tabular RL, deep RL, SL).

FIG.2 is a block diagram of the disclosed architecture. The disclosed architecture comprises a machine learning service 280 comprising a machine learning (ML) management service 200, a data collection engine 210, a training engine 220, and a machine learning (ML) inference engine 230. The architecture also comprises a reinforcement learning (RL) agent 240 which is part of a software 250 configured to implement the functionality of the apparatus. The RL agent 240 comprises an RL actor 242, a client API 244 to handle exchanges with the ML inference engine 230, and a local data agent 246 to handle exchanges with the data collection engine 210. For example, when the apparatus is a base station, the machine learning management service 200 is interfaced with an OAM (Operations, Administration and Maintenance) function 260 of a 5G network.

In FIG.2, dotted lines represent configuration interfaces and continuous lines represent data interfaces. For simplicity, only the main interfaces have been represented in FIG.2.

The ML management service 200, the data collection engine 210, the training engine 220 and the ML inference engine 230 are all agnostic to the use case and can be used to implement any functionality via tabular RL, deep RL, and/or supervised learning. The RL actor 242 is specific to the functionality to be implemented. Its configuration is case specific.

The role of the ML management service 200 is to indicate the needed configurations to the other elements of the architecture. This includes a training configuration sent to the training engine 220, an inference configuration sent to the inference engine 230, a RL action configuration sent to the RL agent 240 and a data collection configuration sent to the data collection engine 210.

For example, the training configuration comprises information related to the architecture of the neural network (e.g. the type of neural network, the number of layers, the number of hidden nodes, the activation function), a definition of the inputs and outputs of the neural network (e.g. for value-based deep RL, the input is the state and the output is the state-action value for each action and for policy-based deep RL the input is the state and the output is the probability for each action), a convergence condition to assess convergence of the training, one or more time-related triggers parameters used to managed convergence checking, and hyperparameters of the RL algorithm e.g. for tabular RL and value-based DRL, the learning rate $\alpha$ and discount factor $\gamma$ used to calculate the state-action values. In deep RL, the ML management service 200 also provides a training triggering condition to the training engine 220. For example, the training triggering condition is a size of data (training data samples) to be collected before starting to train the neural network, or the elapse of a certain time since collection of the training data samples started.

Convergence checking can be configured through the training configuration. For example, convergence checking can be triggered periodically or on demand by the reinforcement learning agent.

For example, the inference configuration comprises an indication of the input information accepted by the neural network (the state) and the expected output of the neural network (the state-action value for each action in value-based DRL or the probability of each action in policy-based DRL).

For example, the RL action configuration comprises information about the exploration/exploitation (e.g. the exploitation parameter and a decreasing factor of an $\varepsilon$-greedy method). And the data collection configuration comprises indications about the information to collect (state, action, reward) and the source to get such information.

The exploration/exploitation balancing rule and the convergence conditions used in tabular RL and in deep RL may be identical or different.

The role of the data collection engine 210 is to collect training data samples from the RL agent 240 through the local data agent 246 and to provide at least part of the collected training data samples to the training engine 220. The collected training data samples are stored in a memory.

In tabular RL, the role of the training engine 220 is to manage the convergence condition and to compute the state-action values of the table.

In deep RL, the role of the training engine 220 is to manage the convergence condition and, in the absence of convergence, compute targets from training data samples obtained from the data collection engine 210, to constitute a training data set which comprises triples of states Si, actions Ai, and targets $T_i$. Then, the training engine 220 learns the weights and biases of the neural network from the training data set. In value-based deep RL, the target associated with a training data sample $\{S_i, A_i, R_i, S_{i+1}\}$ is the state-action value computed from said training data sample. In policy-based deep RL, the target associated with a training data sample $\{S_i, A_i, R_i, S_{i+1}\}$ is the probability of taking action $A_i$ from state $S_i$. Example of convergence condition are that the state-action values / probabilities or the rewards remain constant during a pre-selected time window.

The role of the ML inference engine 230 is to run inferences of the neural network of the DRL model. The neural network is first initialized randomly to collect the training data samples used to constitute the training data set. When the trained neural network is ready it is sent by the training engine 220 to the ML inference engine 230 either directly or indirectly through the ML management service 200. The ML inference engine 230 is not used for tabular RL implementations.

The role of the RL actor 242 is to apply the exploration/exploitation balancing rule included in the configuration information received from the ML management service 200. In exploitation, the RL actor 242 selects the action to apply to the environment based on the inference output received from the ML inference engine 230 for deep RL, or based on the state-action values in the table for tabular RL.

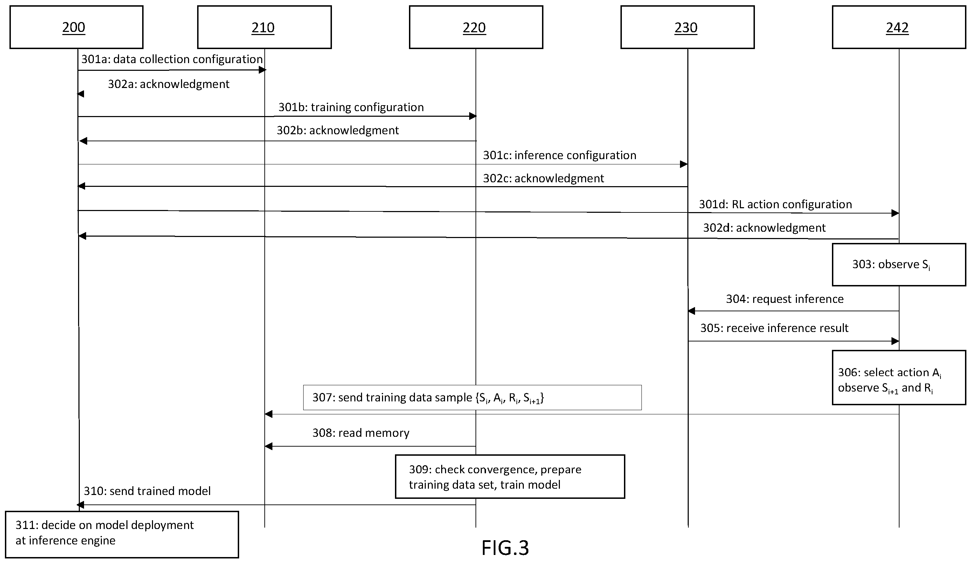

FIG.3 is a chart representing the signaling flow between the different elements of the architecture when DRL is implemented.

At 301a, the ML management service 200 sends the data collection configuration to the data collection engine 210. At 302a, the data collection engine 210 sends an acknowledgment to the ML management service 200. At 301b, the ML management service 200 sends the training configuration to the training engine 220. At 302b, the training engine sends an acknowledgment to the ML management service 200. At 301c, the ML management service 200 sends the inference configuration to the inference engine 230. At 302c, the inference engine 230 sends an acknowledgment to the ML management service 200. At 301d, the ML management service 200 sends the RL action configuration to the RL actor 242. At 302d, the RL actor 242 sends an acknowledgment to the M L management service 200. At 303, the RL actor 242, observes a current state $S_i$ of the environment. At 304, the RL actor 242 sends an inference request to the ML inference engine 230 through the client API 244. The inference request includes an information about the current state $S_i$. At 305, the RL actor 242 receives an inference result from the ML inference engine 230 through the client API 244. At 306, the RL actor 242 choses an action $A_i$ based on the inference result and following an exploration/exploitation balancing rule previously received from the ML management service 200 as part of the RL action configuration. It observes the reward $R_i$ of the environment for the action $A_i$ and the next state $S_{i+1}$ (which will become the current state $S_i$ for the next iteration). At 307, the training data sample $\{S_i, A_i, R_i, S_{i+1}\}$ is sent by the RL actor 242 to the data collection engine 210 through the local data agent 246 for storage in a memory. At 308, when a training triggering condition is met (received as part of the training configuration), the training engine 220 reads the memory to retrieve at least part of the collected data samples. At 309, it checks the convergence condition (also part of the training configuration) and, in the absence of convergence, calculates the targets $T_i$ to prepare the training data set and train the deep neural network based on said training data set. At 310, the training engine 220 sends the trained model to the ML management service 200. At 311, the ML management service 200 decides on deployment of the trained model at the ML inference engine 230 (in an alternative embodiment, not represented in FIG.3, the training engine 220 sends the trained model directly to the ML inference engine 230).

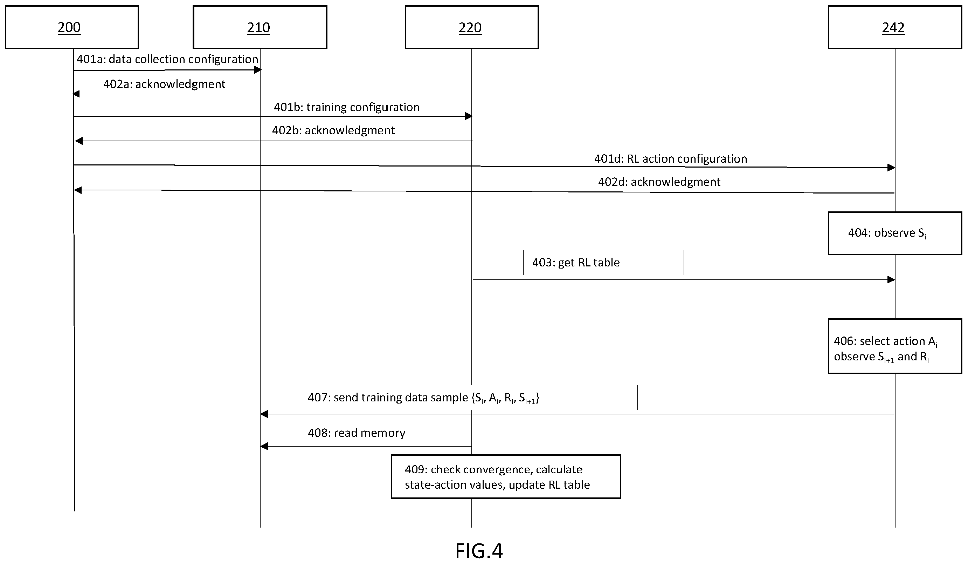

FIG.4 is a chart representing the signaling flow between the different elements of the architecture when tabular RL is implemented.

At 401a, the ML management service 200 sends the data collection configuration to the data collection engine 210. At 402a, the data collection engine 210 sends an acknowledgment to the ML management service 200. At 401b, the ML management service 200 sends the training configuration to the training engine 220. At 402b, the training engine sends an acknowledgment to the ML management service 200. At 401d, the ML management service 200 sends the RL action configuration to the RL actor 242. At 402d, the RL actor 242 sends an acknowledgment to the ML management service 200. At 403, the training engine 220 sends a table of state-action values to the RL actor 242. At 404, the RL actor 242, observes a current state $S_i$ of the environment. At 406, the RL actor 242 choses an action $A_i$ following an exploration/exploitation balancing rule received from the ML management service 200 as part of the RL action configuration. In exploitation, the chosen action $A_i$ is based on the table. of state-action values. Then the RL actor observes the reward $R_i$ of the environment for the action $A_i$ and the next state $S_{i+1}$. At 407, the data sample $\{S_i, A_i, R_i, S_{i+1}\}$ is sent by the RL actor 242 to the data collection engine 210. At 408, training data samples are retrieved from the data collection engine 210. At 409, when convergence wasn't previously achieved, the training engine 220 checks the convergence condition (which is part of the training configuration). At 409 it computes the corresponding state-action value and updates the RL table accordingly. Alternatively instead of sending the table of state-action values at 403, it can be sent at 409.

The blocks or elements of the architecture described herein are to be understood as functions that can implemented in isolation one from another or in combination. For example, the training engine 220, the ML inference engine 230 and the RL actor 242 may be implemented together. Or alternatively, the ML inference engine 230 and the RL actor 242 may be implemented together. Advantageously the ML service management 200 remains separated to enable the architecture to be agnostic to the use case.

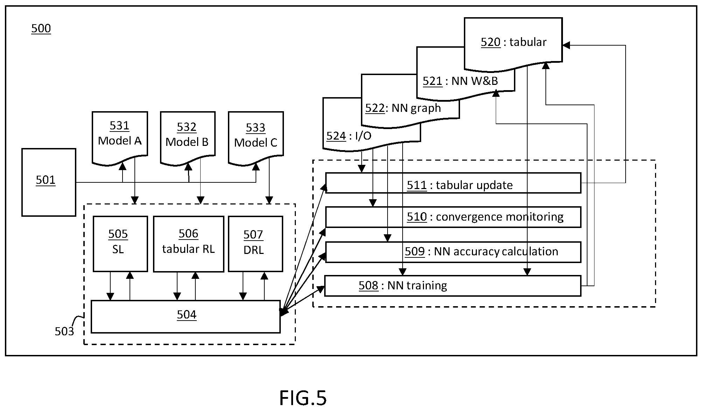

FIG.5 represents an exemplary embodiment of a training engine software container 500. The training engine container 500 comprises platform components and files.

The platform components comprise:

- a training management handler 501, interfacing the training container 500 with the machine learning management service 200 so that the ML management service 200 can provide configuration information to the training engine container 500 and retrieve the training results (success or failure and trained NN in deep RL) from the training engine container 500;
- a training job scheduler 503;
- four workers 508 to 511 respectively for NN training, NN accuracy calculation, convergence monitoring, and tabular update.

The training engine container 500 further comprises at least four data files: a tabular data file 520 a NN weights and biases file 521 (e.g. a Tflite file), a NN graph file 522 (e.g. a Tflite file), and I/O data file 524. The tabular data file 520 stores the table used in tabular RLor in deep RL. The NN graph file 522 stores the architecture of the neural network (architecture of the NN) used in deep RL (nodes and links). The NN weights and biases file 521 stores the weights and biases of the neural network. The I/O data file stores the samples collected by the data collection engine 210 in tabular RL and in deep RL. this would include $\{S_i, A_i, R_i\}$.

The training engine container 500 further comprises training configuration files. In FIG.5, three training configuration files are represented by way of example: a training configuration file 531 for a machine learning model A to be trained with SL, a training configuration file 532 for a machine learning model B to be trained with tabular RL, and a training configuration file 533 for a machine learning model C to be trained with deep RL. The training configuration files contain the parameters and the path towards the data file(s) needed for the training (e.g. path to the tabular data file 520, the model weights and biases file 521, the model graph file 522, and the I/O data file 524).

Based on the training configuration, the training job scheduler 503 creates instances of the necessary automatons amongst the following automatons: a supervised learning (SL) automaton 505, a tabular RL automaton 506, a DRL automaton 507.

The automatons instances 505, 506 and 507 read a training configuration data file and based on the information retrieved, send worker requests to the scheduler 504 and receive completion notifications from the scheduler 504. The scheduler 504 triggers workers 508 to 511 and receives worker results in return.

The workers read data from the I/O data file 524. The tabular update worker 511 updates the tabular data file 520. The neural network training worker 508 reads the tabular data file 520 to get the training data set and updates the neural network weights and biases in the NN weights and biases file 521. The NN accuracy calculation worker 509 is used in deep RL to test the neural network with test data and determine if it is good enough to stop training. The convergence monitoring worker 510 monitors the convergence condition.

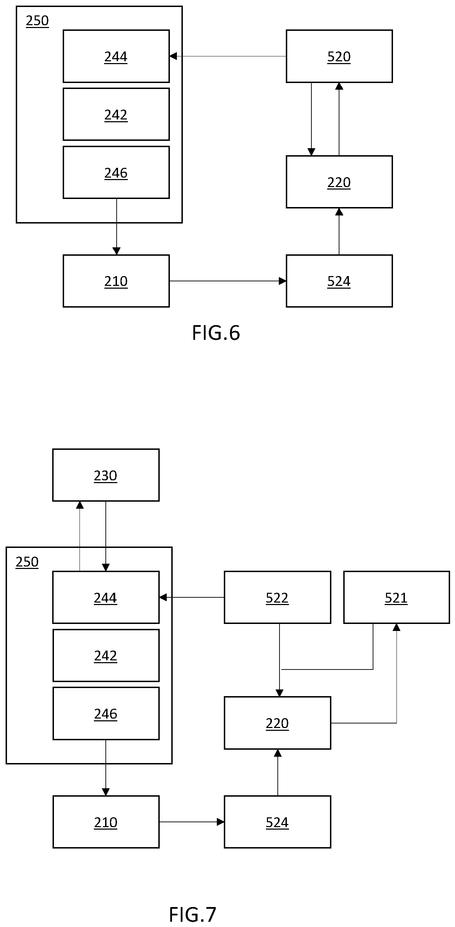

FIG.6 is a block diagram explaining the operation of the training software container 500 for tabular RL. As depicted in FIG.6, the training engine 220 calculates the state-action-values based on the training data samples $\{S_i, A_i, R_i, S_{i+1}\}$ collected from the RL actor 242 by the data collection engine 210 and stored in the I/O file 524. The state-action values are updated in the tabular data file 520. Thereafter, the RL actor 242 can use this file in order to select actions following its exploration/exploitation strategy (e.g. in exploitation the RL actor choses the action with highest state-action value).

FIG.7 is a block diagram explaining the operation of the training software container 500 for deep RL. As depicted in FIG.7, the training engine 220 reads the model graph file 522 and the model weights and biases file 521 to obtain the neural network to be trained. The RL actor 242 sends inference requests to the ML inference engine 230 through the client API 244. In response it receives an inference result from the ML inference engine 230 through the client API 244. Based on the inference result, the RL actor 242 choses an action $A_i$, observes the reward $R_i$ and the next state $S_{i+1}$, and sends a training data sample $\{S_i, A_i, R_i, S_{i+1}$ to the data collection engine 210 through the local data agent 246. The data collection engine 210 stores the received training data sample in the I/O data file 524. When a training triggering condition is met, the training engine 220 reads the I/O data file 524 to build a training data set which is stored in the tabular data file 520 and trains the neural network with the training data set. When training is finalized, it updates the weights and biases file 521 with the weights and biases obtained through training.

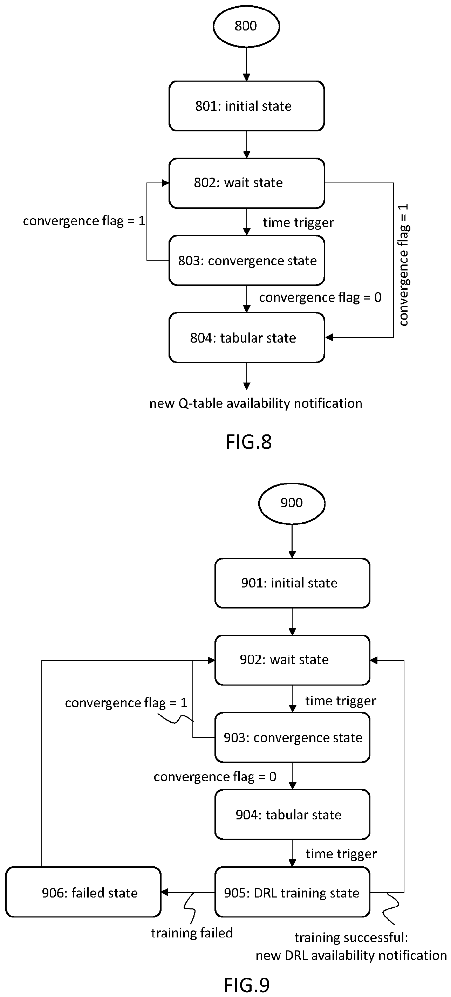

FIG.8 is a state diagram of the architecture in tabular RL. In FIG.8, the tabular RL training process starts at 800 where the ML management service configures the various elements of the architecture. Upon reception of the acknowledgments, the process moves to an initial state 801 where the automaton instance 506 reads the training configuration file 532 and sends a success/failure configuration message to the trainer management handler 501. Upon success, the process moves to a wait state 802, where the automaton instance 506 reads the time-related trigger parameters, the path to the I/O data file 524, checks completeness of the data (e.g. the state and action may be stored correctly and the reward might be missing) and builds the I/O data file 524. Based on the time trigger, it moves to a convergence state 803, where the automaton instance 506 triggers the convergence monitoring worker 510 which reads the I/O data file 524 to run a convergence analysis function. The convergence monitoring worker 510 calculates a convergence flag (0 or 1). Upon convergence (convergence flag = 1), the training process returns to the wait state 802. In the absence of convergence (convergence flag =0), the training process moves to a tabular state 804. In the tabular state 804, the automaton instance 506 triggers the tabular update worker 511 which reads the I/O data file 524, updates the table of state-action values and stores it in the tabular data file 520. Then automaton instance 506 sends a notification of availability of a new table to the trainer management handler 501. In the wait state, when convergence has already been achieved (convergence flag = 1), the process moves directly to the tabular state 804, skipping the convergence state. This happens when the RL continues to be used after convergence to make decisions. For example, in the context of a base station, this may be the case for beam selection.

FIG.9 is a state diagram of the architecture in deep RL. In FIG.9, an initial state 901, a wait state 902, a convergence state 903 are depicted which are like those depicted in FIG.8 for tabular RL, with the difference that the automaton instance involved is automaton instance 507. The deep RL training process moves from the convergence state 903 to a tabular state 904 when the convergence flag is null, to prepare the training data set required before launching the training of the deep neural network. In the tabular state 904, the automaton instance 507 triggers the tabular update worker 511 which reads the training samples $\{S_i, A_i, R_i, S_{i+1}\}$ in the I/O data file 524, computes the targets $T_i$ to be used for the training (state-action values or probabilities), and stores the triples $\{S_i, A_i, T_i\}$ in the tabular data file 520 to constitute the training data set. A time trigger moves the process from the tabular state 904 to a training state 905. In the training state 905, the automaton instance 507 triggers the neural network training worker 508 with training configuration parameters. The neural network training worker 508 reads the tabular data file 520 and trains the deep neural network with the training data set retrieved from the tabular data file 520. Then the model accuracy calculation worker 509 executes batches of inferences with test data to determine whether training shall continue / stop based on an accuracy rate. When training is successful the automaton instance 507 sends a notification to the trainer management handler 501 that a new model is available, and the process returns to the wait state 902. When training fails the process moves to a failed state 906. In the failed state 906, the automaton instance 507 sends a failure notification to the trainer management handler 501 and returns to the wait state 902. Alternatively, instead of returning to the wait state, the automaton instance 507 stays in the failed state until new training configuration information is received from the machine learning management service (the machine learning management service can send new training configuration information upon reception of the fail notification from the training management handler 501).

In an embodiment not depicted in the figures, the training engine 220 triggers an update of the exploration/exploitation balancing rule used by the reinforcement learning agent 240 when the convergence condition is met, to stop exploration.

The steps described above by reference to FIG.1 to 9 may be executed sequentially, in parallel, or in a different order based on particular implementations.

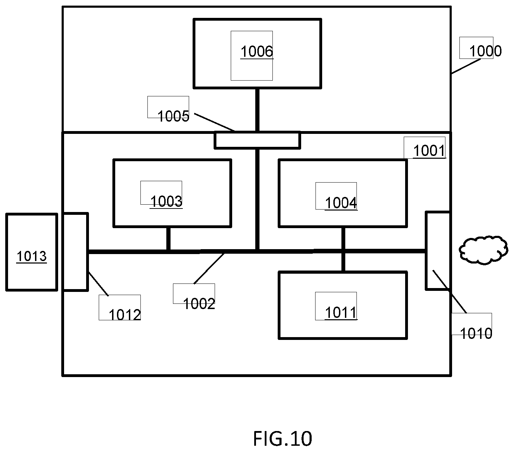

FIG.10 depicts a high-level block diagram of an apparatus 1000 suitable for implementing various aspects of the disclosure. For example, a network apparatus as disclosed above can be implemented in the form of apparatus 1000. Although illustrated in a single block, in other embodiments the apparatus 1000 can also be implemented using parallel and/or distributed architectures, for example it can be distributed on different hardware platforms and/or different locations.

According to an exemplary embodiment, depicted in FIG.10, apparatus 1000 comprises a printed circuit board 1001 on which a communication bus 1002 connects a processor 1003 (e.g., a central processing unit "CPU"), a random access memory 1004, a storage medium 1011, possibly an interface 1005 for connecting one or more input/output devices 1006 such as a display, a mouse or trackpad, a keyboard, etc... a wireless network interface 1010 and/or a wired network interface 1012. Depending on the use case, the apparatus may implement only part of the above. Certain modules of FIG.10 may be internal or connected externally, in which case they do not necessarily form integral part of the apparatus itself. E.g. a display may be connected to the apparatus only under specific circumstances, or the apparatus may be controlled through another device with a display, i.e. no specific display and interface 1005 are required for such an apparatus. Memory 1011 contains software code which, when executed by processor 1003, causes the apparatus to perform the methods described herein. In an exemplary embodiment, a detachable storage medium 1013 such as a USB stick may also be connected. For example, the detachable storage medium 1013 can hold the software code to be uploaded to memory 1011.

The processor 1003 may be any type of processor such as a general-purpose central processing unit ("CPU") or a dedicated microprocessor such as an embedded microcontroller or a digital signal processor ("DSP").

In addition, apparatus 1000 may also include other components typically found in computing systems, such as an operating system, queue managers, device drivers, or one or more network protocols that are stored in memory 1011 and executed by the processor 1003.

Although aspects herein have been described with reference to particular embodiments, it is to be understood that these embodiments are merely illustrative of the principles and applications of the present disclosure. It is therefore to be understood that numerous modifications can be made to the illustrative embodiments and that other arrangements can be devised without departing from the spirit and scope of the disclosure as determined based upon the claims and any equivalents thereof.

For example, the data disclosed herein may be stored in various types of data structures which may be accessed and manipulated by a programmable processor (e.g., CPU or FPGA) that is implemented using software, hardware, or combination thereof.

It should be appreciated by those skilled in the art that any block diagrams herein represent conceptual views of illustrative circuitry embodying the principles of the disclosure. Similarly, it will be appreciated that any flow charts, flow diagrams, state transition diagrams, and the like represent various processes which may be substantially implemented by circuitry.

Each described function, engine, block, step can be implemented in hardware, software, firmware, middleware, microcode, or any suitable combination thereof. If implemented in software, the functions, engines, blocks of the block diagrams and/or flowchart illustrations can be implemented by computer program instructions / software code, which may be stored or transmitted over a computer-readable medium, or loaded onto a general purpose computer, special purpose computer or other programmable processing apparatus and / or system to produce a machine, such that the computer program instructions or software code which execute on the computer or other programmable processing apparatus, create the means for implementing the functions described herein.

In the present description, block denoted as "means configured to perform ..." (a certain function) shall be understood as functional blocks comprising circuitry that is adapted for performing or configured to perform a certain function. A means being configured to perform a certain function does, hence, not imply that such means necessarily is performing said function (at a given time instant). Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

As used herein, the term "and/or," includes any and all combinations of one or more of the associated listed items.

When an element is referred to as being "connected," or "coupled," to another element, it can be directly connected or coupled to the other element or intervening elements may be present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

## Claims

1.   An apparatus (1000) comprising memory (1011) and processing means for implementing one or more functionalities of the apparatus (1000) with on-device reinforcement machine learning, said means comprising at least a reinforcement learning agent (110) for interacting with an environment (120), a machine learning management service (200), a data collection engine (210), a training engine (220), and a machine learning inference engine (230), configured so that in a first reinforcement learning mode:

   the machine learning management service (200) provides configuration information to at least the data collection engine (210), the training engine (220) and the machine learning inference engine (230),
the reinforcement learning agent (110) provides training data samples to the data collection engine (210), a training data sample comprising:

- a current state $S_i$ of the environment (120),
- an action $A_i$ chosen by the reinforcement learning agent (110) depending on an inference result provided by the machine learning inference engine (230) and following a first exploration/exploitation balancing rule provided by the machine learning management service (200) as part of the configuration information,
- a next step $S_{i+1}$ observed in response to applying the chosen action to the environment (120), and
- a reward $R_i$ from the environment (120) for the action applied at state $S_i$,

the data collection engine (210) stores the training data samples obtained from the reinforcement learning agent (110),
the training engine (220) checks a first convergence condition provided by the machine learning management service (200) as part of the configuration information, and in the absence of convergence:

- computes a target $T_i$ from each training data sample $\{S_i, A_i, R_i, S_{i+1}\}$ for a plurality of training data samples obtained from the data collection engine (210),
- builds a training data set comprising triples of states Si, actions Ai, and targets Tj,
- trains a neural network with said training data set to learn a value or a policy function, and
- provides the trained neural network for use by the machine learning inference engine (230) for implementing said functionality.

2. The apparatus (1000) as claimed in claim 1, wherein the trained neural network is provided to the machine learning inference engine (230), by the training engine (220) directly or indirectly through the machine learning management service (200).

3. The apparatus (1000) as claimed in any of claims 1 or 2, wherein the training engine (220) is configured to trigger an update of the first exploration/exploitation balancing rule when the first convergence condition is met to stop exploration.

4. The apparatus (1000) as claimed in any of claims 1 to 3, wherein the machine learning management service (200), the data collection engine (210), and the training engine (220) are further configured so that in a second reinforcement learning mode:

the machine learning management service (200) provides configuration information to at least the data collection engine (210) and the training engine (220),
the reinforcement learning agent (110) provides training data samples to the data collection engine (210), a training data sample comprising:

- a current state $S_i$ of the environment (120),
- an action $A_i$ chosen by the reinforcement learning agent (110) depending on state-action values stored in the table, and following a second exploration/exploitation balancing rule provided by the machine learning management service (200) as part of the configuration information,
- a next step $S_{i+1}$ observed in response to applying the chosen action to the environment (120), and
- a reward $R_i$ from the environment (120) for the action applied at state $S_i$,

the data collection engine (210) stores the training data samples obtained from the reinforcement learning agent (110),
the training engine (220) checks a second convergence condition provided by the machine learning management service (200) as part of the configuration information, and in the absence of convergence computes state-action values from each training data sample $\{S_i, A_i, R_i, S_{i+1}\}$ for a plurality of training data samples obtained from the data collection engine (210), and updates the table with the computed state-action values, wherein a given state-action value is computed for a given training data sample $\{S_i, A_i, R_i, S_{i+1}\}$ as a function of an expected cumulative reward achievable by applying the given action $A_i$ to the given current state $S_i$ while taking into account the given reward $R_i$ and the given next state $S_{i+1}$.

5. The apparatus (1000) as claimed in claim 1 to 4, wherein the machine learning management service (200) is configured to provide a training triggering condition to the training engine (220), and the training engine (220) is configured to obtain training data samples from the data collection engine (210) when the training triggering condition is met.

6. The apparatus (1000) as claimed in any of claims 4 or 5, wherein the training engine (220) is configured to trigger an update of the second exploration/exploitation balancing rule when the second convergence condition is met to stop exploration.

7. A computer-implemented on-device reinforcement machine learning method for implementing a functionality of an apparatus (1000) through a reinforcement learning agent (110) interacting with an environment (120), the method involving a machine learning management service (200), a data collection engine (210), a training engine (220), and a machine learning inference engine (230), and the method comprising, in a first reinforcement learning mode:

   by the machine learning management service (200), providing configuration information to at least the data collection engine (210), the training engine (220) and the machine learning inference engine (230),
   by the reinforcement learning agent (110), providing training data samples to the data collection engine (210), a training data sample comprising:

   - a current state $S_i$ of the environment (120),
   - an action $A_i$ chosen by the reinforcement learning agent (110) depending on an inference result provided by the machine learning inference engine (230), and following a first exploration/exploitation balancing rule provided by the machine learning management service (200) as part of the configuration information,
   - a next step $S_{i+1}$ observed in response to applying the chosen action to the environment (120), and
   - a reward $R_i$ from the environment (120) for the action applied at state $S_i$,

   by the data collection engine (210), storing the training data samples obtained from the reinforcement learning agent (110),
   by the training engine (220) checking a first convergence condition provided by the machine learning management service (200) as part of the configuration information, and in the absence of convergence:

   - computing a target $T_i$ from each training data sample $\{S_i, A_i, R_i, S_{i+1}\}$ for a plurality of training data samples,
   - building a training data set comprising triples of states Si, actions Ai, and targets $T_i$,
   - training a neural network with said training data set to learn a value or a policy function, and
   - providing the trained neural network for use by the machine learning inference engine (230) for implementing said functionality.

8. The method as claimed in claim 7, further comprising providing the trained neural network to the machine learning inference engine (230), by the training engine (220) directly or indirectly through the machine learning management service (200).

9. The method as claimed in any of claims 7 or 8, further comprising triggering an update of said first exploration/exploitation balancing rule by the training engine (220) when the first convergence condition is met to stop exploration.

10. The method as claimed in any of claims 7 to 9, further comprising, in a second reinforcement learning mode:

   by the machine learning management service (200), providing configuration information to at least the data collection engine (210) and the training engine (220),
   by the reinforcement learning agent (110), providing training data samples to the data collection engine (210), a training data sample comprising:

   - a current state Si of the environment (120),
   - an action Ai chosen by the reinforcement learning agent (110) depending on state-action values stored in the table, and following a second exploration/exploitation balancing rule provided by the machine learning management service (200) as part of the configuration information,
   - a next step Si+1 observed in response to applying the chosen action to the environment (120), and
   - a reward Ri from the environment (120) for the action applied,

   by the data collection engine (210), storing the training data samples obtained from the reinforcement learning agent (110),

by the training engine (220), checking a second convergence condition provided by the machine learning management service (200) as part of the configuration information, and in the absence of convergence computing state-action values from each training data sample $\{S_i, A_i, R_i, S_{i+1}\}$ for a plurality of training data samples obtained from the data collection engine (210), and updating the table with the computed state-action values, wherein a given state-action value is computed for a given training data sample $\{S_i, A_i, R_i, S_{i+1}\}$ as a function of an expected cumulative reward achievable by applying the given action $A_i$ to the given current state $S_i$ while taking into account the given reward $R_i$ and the given next state $S_{i+1}$.

11. The method as claimed in any of claims 7 to 10, further comprising providing a training triggering condition by the machine learning management service (200) to the training engine (220) and, obtaining training data samples by the training engine (220) from the data collection engine (210) when the training triggering condition is met.

12. The method as claimed in any of claims 10 or 11, further comprising triggering an update of the second exploration/exploitation balancing rule by the training engine (220) when the first convergence condition is met to stop exploration.

13. An apparatus (1000) as claimed in any of claims 1 to 6, or a method as claimed in claims 7 to 12, wherein the apparatus (1000) is a base station of a radio access network.

14. A computer program comprising program instructions which when executed by an apparatus (1000) cause the apparatus (1000) to execute the steps of a method claimed in any of claims 7 to 12.

FIG.1

FIG.2

FIG.3

EP 4 604 022 A1

| 200 | 210 | 220 | 242 |
|---|---|---|---|

401a: data collection configuration

402a: acknowledgment

401b: training configuration

402b: acknowledgment

401d: RL action configuration

402d: acknowledgment

404: observe $S_i$

403: get RL table

406: select action $A_i$
observe $S_{i+1}$ and $R_i$

407: send training data sample $\{S_i, A_i, R_i, S_{i+1}\}$

408: read memory

409: check convergence, calculate
state-action values, update RL table

FIG.4

FIG.5

FIG.6

FIG.7

800

801: initial state

802: wait state

convergence flag = 1

time trigger

convergence flag = 1

803: convergence state

convergence flag = 0

804: tabular state

new Q-table availability notification

**FIG.8**

900

901: initial state

902: wait state

convergence flag = 1

time trigger

903: convergence state

convergence flag = 0

904: tabular state

time trigger

906: failed state

905: DRL training state

training failed

training successful:
new DRL availability notification

**FIG.9**

FIG.10

Europäisches
Patentamt

European
Patent Office

Office européen
des brevets

# EUROPEAN SEARCH REPORT

**Application Number**

EP 25 15 4844

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHENG PENG ET AL: "Deep Reinforcement Learning for Online Resource Allocation in IoT Networks: Technology, Development, and Future Challenges", IEEE COMMUNICATIONS MAGAZINE, IEEE SERVICE CENTER, PISCATAWAY, US, vol. 61, no. 6, 1 June 2023 (2023-06-01), pages 111-117, XP011943216, ISSN: 0163-6804, DOI: 10.1109/MCOM.001.2200526 [retrieved on 2023-06-20] * abstract * * page 3 - page 6; figures 1-4 * | 1-14 | INV. G06N3/092  ADD. H04W88/08 |
| A | AHMED AZZA H AZZA@SIMULA NO ET AL: "Deep reinforcement learning-based control framework for radio access networks", PROCEEDINGS OF THE 6TH ANNUAL ACM SYMPOSIUM ON COMPUTATIONAL FABRICATION, ACMPUB27, NEW YORK, NY, USA, 14 October 2022 (2022-10-14), pages 897-899, XP058911949, DOI: 10.1145/3495243.3558276 ISBN: 978-1-4503-9262-4 * the whole document * | 1-14 | |

**TECHNICAL FIELDS SEARCHED (IPC)**

G06N
H04W

The present search report has been drawn up for all claims

| Place of search | Date of completion of the search | Examiner |
|---|---|---|
| The Hague | 2 July 2025 | Malatesta, Lori |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)